# EUROPEAN PATENT SPECIFICATION

(11) **EP 4 541 205 B1**
(45) Date of publication and mention of the grant of the patent: **01.04.2026**
(21) Application number: 24206861.7
(22) Date of filing: 16.10.2024
(51) Int. Cl.: A23L 2/08, B01D 1/06, B01D 1/26, B01D 1/28

(54) **PLANT AND METHOD FOR CONCENTRATING TOMATO JUICE**
VORRICHTUNG UND VERFAHREN ZUM KONZENTRIEREN VON TOMATENSAFT
APPAREIL ET PROCÉDÉ DE CONCENTRATION DE JUS DE TOMATE

(30) Priority: 20.10.2023 IT 202300021909
(43) Date of publication of application: 23.04.2025
(73) Proprietor: ROSSI INGEGNERIA ALIMENTARE SOCIETA' A RESPONSABILITA' LIMITATA, 43122 Parma (PR) (IT)
(72) Inventor: ROSSI, Giovanni, 43056 TORRILE (PR) (IT); ROSSI, Francesco, 43121 PARMA (IT)
(74) Representative: Corradini, Corrado

(56) References cited:
- US-A1- 2005 260 312
- US-A1- 2023 172 243

## Description

### Technical field

The present invention relates to a plant and a method for concentrating tomato juice.

### Prior art

It is well known that the production of tomato concentrate begins with a chopping step, during which the whole tomatoes are chopped up into a pumpable mass containing chopped tomato with the relative peels and seeds.

After being subjected to an enzymatic deactivation process, this chopped tomato with peels and seeds is subjected to a hot extraction process, for example inside special centrifugal turbo-extractors, which allows to separate the peels and seeds and thus to obtain a tomato juice substantially devoid of solid parts.

The tomato juice thus obtained is finally evaporated, in order to reduce the amount of water present therein, until a concentrated juice is obtained at the desired concentration. The evaporation process is generally carried out using evaporators in which the tomato juice is heated so as to cause the evaporation of a part of the water contained therein which separates from the solute in the form of vapour.

A traditional tomato juice concentration plant is one that comprises a plurality of evaporators connected according to a multiple-effect scheme.

In this plant, the tomato juice passes through the evaporators one after the other (i.e. in series), gradually increasing its concentration and producing vapour each time.

The vapour produced in each evaporator is used in the following evaporator, placing it in a heat exchange relation with the tomato juice it contains and causing it to further evaporate.

The first evaporator in the series is supplied with vapour produced directly from a boiler. To reduce energy consumption, plants involving a first tomato juice pre-concentration step and a second final concentration step have also been proposed in the past.

In these plants, the pre-concentration step may be carried out by one or more evaporators combined with a mechanical vapour compression system.

In practice, the vapours obtained from the evaporation of the tomato juice in the evaporator are supplied to a mechanical compressor, which, after increasing the pressure and thus the temperature, sends them back into the evaporator, placing them in a heat exchange relation with the tomato juice to cause evaporation thereof.

The final concentration step can instead be carried out using a multiple-effect evaporator system of the type outlined above.

Plants have also been proposed in which the tomato concentrating process is carried out entirely by mechanical compression of the vapour obtained.

These plants are similar to multiple effect plants, in which, however, the vapour supplied to the first evaporator in the series is not produced by a boiler but is obtained by compressing the vapours obtained by the various evaporators.

However, all these known plants have some drawbacks.

For example, traditional multiple-effect concentration plants do not allow to recover the latent heat of the vapour resulting from the evaporation of tomato juice.

Plants with a pre-concentration step make it possible to recover the latent heat of the vapour resulting from the evaporation of the tomato juice, but only partially.

Total mechanical vapour compression plants allow full recovery of the latent heat of the vapour resulting from the evaporation of the tomato juice, but, due to the high temperature difference between the vapour leaving the plant and the vapour to be introduced back into the plant, they have the disadvantage of requiring a very high mechanical power expenditure on the compressor and/or circulation system produced in the heat exchanger.

US2023/172243 A1 and US2005/260312 A1 disclose plants for concentrating tomato juice.

### Disclosure of the invention

In the light of the foregoing, an object of the present invention is to solve or at least to mitigate the aforementioned drawbacks of the prior art, in the context of a simple, rational and relatively cost-effective solution.

This and other objects are reached by the characteristics of the invention as set forth in the independent claims. The dependent claims outline preferred and/or particularly advantageous aspects of the invention but not strictly necessary for implementing it.

In particular, an embodiment of the present invention makes available a plant for concentrating tomato juice, comprising:
- at least a first evaporator adapted to subject an incoming tomato juice to an evaporation process to obtain as output a concentrated tomato juice and vapour,
- at least a second evaporator adapted to subject the concentrated tomato juice leaving the first evaporator to at least one evaporation process to obtain as output further concentrated tomato juice and vapour,
- a first compressor adapted to receive as input the vapour leaving the first evaporator and the vapour leaving the second evaporator to obtain as output a compressed vapour,
- a second compressor adapted to receive a part of the compressed vapour leaving the first compressor in order to obtain as output a further compressed vapour,
- a first distribution network adapted to convey the compressed vapour leaving the first compressor in part into the second compressor and in part into the first evaporator, so that it is put in a heat exchange relation with the tomato juice in the first evaporator,
- a second distribution network adapted to convey the further compressed vapour leaving the second compressor into the second evaporator so that it is put in a heat exchange relation with the tomato juice in the second evaporator.

Thanks to this solution, the concentration process is substantially divided into at least two steps, a first step in which the tomato juice is concentrated to an intermediate value, to obtain a semi-concentrated product, and a second step in which the tomato juice is concentrated to the desired final value.

The vapours released in both these steps are fully recovered and compressed by the first compressor leading them to a temperature value lower than that required to obtain the final concentration, but high enough to obtain the intermediate concentration step.

Thus, a part of the vapour compressed by the first compressor can be directly used to cause the evaporation of the tomato juice in the first step.

Only the remaining portion of vapour is then further compressed in the second evaporator to reach the temperatures required to complete evaporation in the second step.

The result is that the first compressor, while treating a large amount of vapour, will have to compress it to an intermediate (relatively low) compression level, whereas the second compressor, while having to achieve a high compression level, will have to treat a smaller volume of vapour.

In practice, the heat exchange necessary for the semi-concentrated product is performed with a reduced temperature increase and therefore under conditions of maximum energy efficiency, while the heat exchange necessary for the higher-concentrated product is performed with a greater temperature increase, so as to allow the concentration of the product with a limited heat exchange surface and a reduced mechanical power necessary for its circulation inside the exchanger.

Consequently, compared to current evaporation plants that use only mechanical vapour compression, the proposed one will be able to make use of pumps and compressors that are generally smaller, cheaper and substantially less energy-intensive.

Compared to other known evaporation plants, the proposed one also has the advantage of allowing almost full recovery of the latent heat of the vapours resulting from the evaporation of the tomato juice, with consequent energy saving.

Ultimately, thanks to the proposed plant, the evaporation process consumes no vapour, guarantees excellent energy efficiency and achieves a reduction in CO₂ emissions, since no boiler vapour or at least a reduced amount thereof is required.

According to an aspect of the invention, the plant may comprise a plurality of first evaporators connected so as to be crossed in series by the tomato juice, the first compressor being adapted to receive as input the vapour leaving all of said first evaporators, and the first distribution network being adapted to convey a part of the compressed vapour leaving the first compressor into each of said first evaporators.

Thus, it is advantageously possible to improve the yield of the first concentration step.

Regardless of their number, another aspect of the invention provides that each first evaporator may be a hybrid circulation evaporator.

This type of evaporator has the advantage that it allows evaporation using vapour at an intermediate (relatively low) temperature and then using vapour at an intermediate (relatively low) compression level to bring the concentration of the tomato juice up to a relatively high intermediate level, generally higher than that achievable with an evaporator of another type, e.g. a falling film evaporator.

Nevertheless, it is not excluded that, in some embodiments, each first evaporator may be an evaporator of another type, for example but not exclusively, a falling film evaporator.

According to a further aspect of the invention, the plant may also comprise a plurality of second evaporators connected so as to be crossed in series by the concentrated juice, the first compressor being adapted to receive as input the vapour leaving all said second evaporators, and the second distribution network being adapted to convey a portion of the further compressed vapour leaving the second compressor into each of said second evaporators.

Thus, it is advantageously possible to improve the yield of the second concentration step.

Regardless of their number, an aspect of the invention provides that each second evaporator can be a forced circulation evaporator.

Since the tomato juice processed in the second concentration step is already rather dense, this type of evaporator improves the circulation of the tomato juice and thus the efficiency of the system.

However, it is not excluded that, in some embodiments, each second evaporator may be an evaporator of another type, e.g. but not exclusively a hybrid circulation evaporator.

According to a possible embodiment of the present invention, the plant may further comprise at least one preliminary evaporator, which is adapted to subject an incoming tomato juice to an evaporation process in order to obtain as output a pre-concentrated tomato juice and vapour, said at least one first evaporator being adapted to receive as input the pre-concentrated tomato juice leaving said preliminary evaporator.

Thanks to this solution, the concentration process is substantially divided into three steps, with a preliminary step to bring the tomato juice to a first intermediate concentration level, followed by the same first and second steps outlined above, to reach a second intermediate concentration level (semi-concentrated product) and finally the final concentration level, respectively, improving the efficiency and yield of the entire concentration process. In this context, a variant of the present invention provides that the first distribution network may be adapted to convey a portion of the compressed vapour leaving the first compressor into the preliminary evaporator, so as to put it in heat exchange relation with the tomato juice in said preliminary evaporator, and so that the first compressor is also adapted to receive the vapour leaving the preliminary evaporator.

In other words, the heat required for the operation of the preliminary evaporator is supplied directly from the vapour compressed in the first compressor, with no need for additional devices and thus in a rather simple and cost-effective way.

According to another variant, the plant might however comprise a further compressor, which is adapted to receive as input the vapour leaving the preliminary evaporator in order to obtain a compressed vapour as output, and a connection line adapted to convey the compressed vapour leaving the preliminary compressor back into the preliminary evaporator itself, so as to put it in a heat exchange relation with the tomato juice in the preliminary evaporator.

A preliminary concentration step is thus obtained that functions substantially autonomously, but still without further energy expenditure, by compression of the same vapours that are produced and recovered from within.

Regardless of all these circumstances, said preliminary evaporator may be a falling film evaporator.

This type of evaporator has the advantage of allowing a very high heat exchange coefficient and a rather short residence time for the tomato juice.

Finally, another aspect of the invention provides that the plant may also comprise a boiler adapted to produce vapour and a further distribution network, which is adapted to convey the vapour produced by the boiler into each of the first and/or second evaporators, and possibly into the preliminary evaporator (if present), so as to put it into a heat exchange relationship with the tomato juice therein, possibly after having made it pass, at least partially, through the first and/or second compressor.

The presence of this boiler makes it possible to supply the evaporators with an additional amount of vapour, and thus heat, in the event that process requirements, in certain particularly critical circumstances, cannot be completely satisfied by the compression of the vapours obtained from the evaporation of the tomato juice.

In addition to the plant outlined above, the present invention also makes available a corresponding method for concentrating tomato juice, which method comprises the steps of:
- subjecting an incoming tomato juice to an initial evaporation process to obtain a concentrated tomato juice and vapour,
- subjecting the concentrated tomato juice obtained from the first evaporation process to a second evaporation process to obtain a further concentrated tomato juice and vapour,
- compressing the vapour obtained from the first and second evaporation processes with a first compressor so as to obtain a compressed vapour,
- using a first part of the compressed vapour to carry out the first evaporation process,
- compressing a second part of the compressed vapour with a second compressor so as to obtain a further compressed vapour,
- using the further compressed vapour to carry out the second evaporation process.

This method achieves essentially the same advantages mentioned in relation to the plant outlined above, namely those of consuming no vapour, ensuring optimum energy efficiency and achieving a reduction in CO₂ emissions.

Of course, all ancillary aspects of the invention that have been illustrated above with reference to the plant are understood to apply, *mutatis mutandis,* also to the corresponding method.

In particular, but not exclusively, the method may comprise the step of subjecting a tomato juice to a preliminary evaporation process in order to obtain as output a pre-concentrated tomato juice and vapour, which will constitute the tomato juice that is subsequently subjected to the aforementioned first and second evaporation processes.

In this context, the method may provide carrying out said preliminary evaporation process using a part of the compressed vapour leaving the first compressor and compressing the vapour obtained from the preliminary evaporation process in the first compressor.

Alternatively or additionally, the method may provide compressing the vapour obtained from the preliminary evaporation process with a further compressor, so as to obtain a compressed vapour, and using this compressed vapour to carry out the preliminary evaporation process.

The method may also provide producing vapour with a boiler and using this boiler vapour to carry out the first and/or second evaporation process, and possibly to carry out the preliminary evaporation process (if applicable).

### Brief description of the drawings

Further features and advantages of the invention will be more apparent after reading the following description provided by way of a non-limiting example, with the aid of the accompanying drawings.
Figure 1 is a hydraulic diagram of a concentration plant according to an embodiment of the present invention.
Figure 2 is a diagram of a hybrid circulation evaporator.
Figure 3 is a diagram of a forced circulation evaporator.
Figure 4 is a hydraulic diagram of a variant of the plant of Figure 1.
Figure 5 is a diagram of a falling film evaporator.
Figure 6 is a hydraulic diagram of a variant of the plant of Figure 4.

### Detailed description

The above figures show several examples of a plant 100 for concentrating tomato juice A.

By way of example but not limitation, the tomato juice to be concentrated A may come from a centrifugal turbo-extractor and/or a pre-concentration plant.

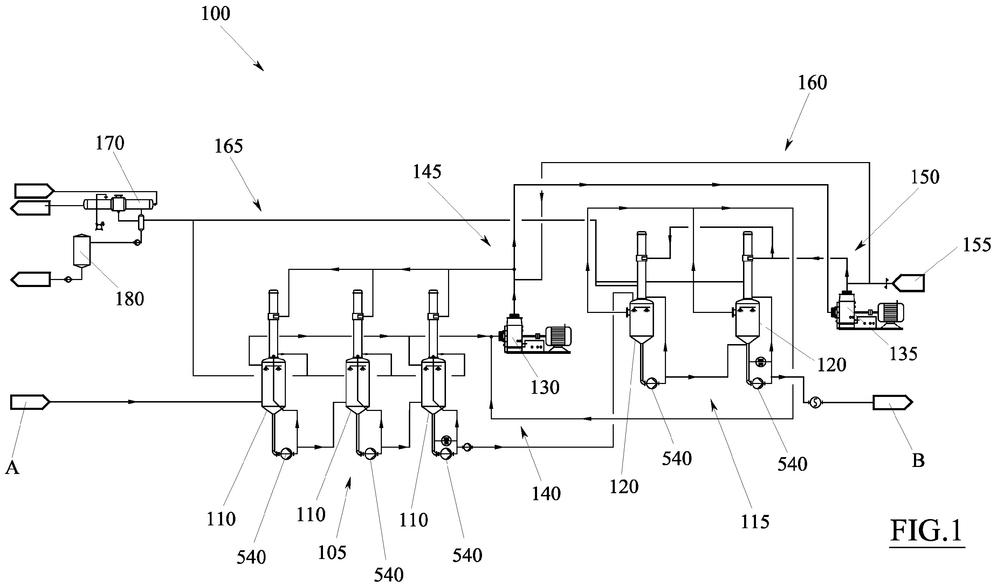

In accordance with the diagram in Figure 1, the plant 100 comprises a first concentration apparatus 105.

The first concentration apparatus 105 comprises at least one, more preferably a plurality, of first evaporators 110.

Inside each of these first evaporators 110, the incoming tomato juice A is subjected to an evaporation process so as to obtain as output a (more) concentrated tomato juice and vapour.

More specifically, in order to carry out this evaporation process, each first evaporator 110 generically comprises a heat exchanger adapted to put the tomato juice A in a heat exchange relationship with high-temperature vapour, keeping them physically separated, so that the vapour releases heat to the tomato juice, causing the evaporation of at least part of the solvent (typically water) contained therein.

The temperature of the vapour that is put in heat exchange relation with the tomato juice in each first evaporator 110 is preferably equal to or higher than 76 °C.

In the case illustrated herein, wherein the first concentration apparatus 105 comprises a plurality of first evaporators 110, the latter are preferably connected so as to be crossed in series by the tomato juice A, i.e. so that the (more concentrated) tomato juice leaving each of these first evaporators 110 is supplied to the inlet of the next first evaporator 110, to be further concentrated.

Preferably, each of these first evaporators 110 can be a hybrid circulation (or hybrid flow) evaporator.

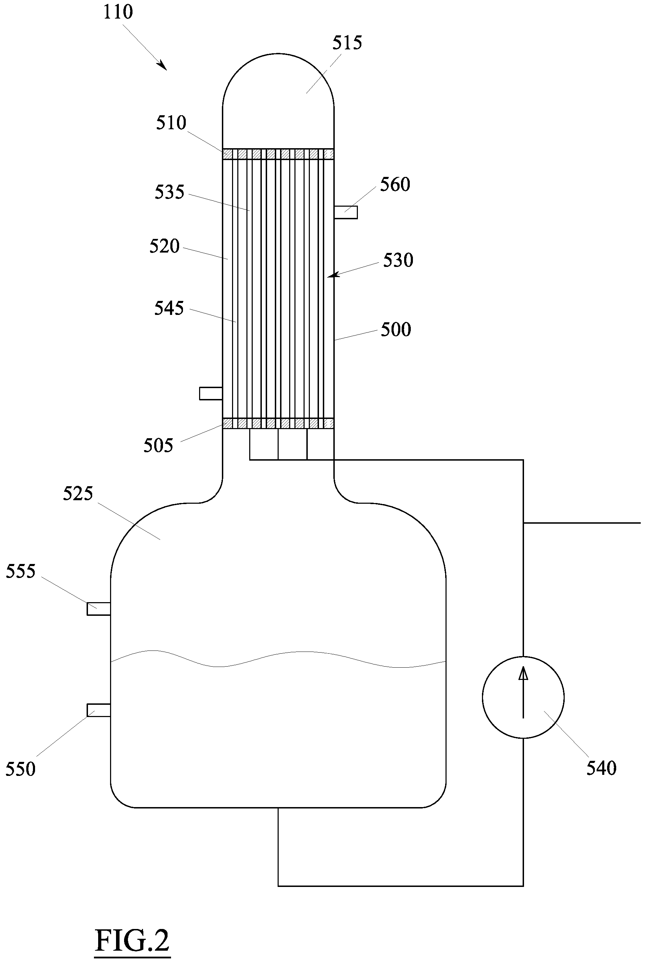

As schematically illustrated in Figure 2, a hybrid circulation evaporator generally comprises an outer casing 500, whose internal volume is divided by a pair of separating baffles 505 and 510 into three distinct chambers, an upper chamber 515, an intermediate chamber 520 comprised between the two separating baffles 505 and 510, and a lower chamber 525.

A tube bundle 530 may be housed within the intermediate chamber 520, which is formed by a plurality of substantially vertically oriented tubes, comprising a set of first tubes 535, which are adapted to put the delivery of a pump 540 in communication with the upper chamber 515, and a set of second tubes 545, which are adapted to connect the upper chamber 515 with the lower chamber 525.

The pump 540 is adapted to receive the tomato juice entering the evaporator and pump it into the first tubes 535, so as to create a forced upward flow of tomato juice within them, until it reaches the upper chamber 515.

The tomato juice reaching the upper chamber 515, which acts as a pressurised distribution chamber, distributes and descends along the second tubes 545 due to gravity and pressure existing in the upper chamber 515.

Thus, the first tubes 535 are substantially filled with tomato juice, while the second tubes 545 are run by a sort of veil or film of tomato juice that flows adherent to the inner surfaces of the second tubes 545, leaving them clear in the middle.

The thickness of the veil or film of tomato juice flowing along the inner surfaces of the second tubes 545 varies according to the proportion existing between the number of first (ascending) tubes 535 and the number of second (descending) tubes 545, which proportion is selected at the design step depending on the characteristics of the product processed by the evaporator (e.g. according to concentration, degree of refining, etc.).

The outer surfaces of the first and second tubes 535 and 545 are simultaneously slightly touched by the hot vapour, which has the effect of heating the tubes and the tomato juice therein, causing the evaporation of a part of the water contained therein which, in the form of vapour, will also progressively occupy the central part of the second (descending) tubes 545 left free of the veil or film of tomato juice.

Thus, both the (more) concentrated tomato juice and the vapour produced (separated) by the evaporation of the tomato juice itself are collected in the lower chamber 525.

In the illustrated example, the pump 540 is adapted to draw the tomato juice directly from the lower chamber 525 of the evaporator, which is further provided with an inlet port 550 for supplying the tomato juice to be concentrated.

The delivery of the pump 540 can then be connected to a distribution network which conveys the pumped tomato juice in part towards the first tubes 535 of the tube bundle 530 (as outlined above), and in part towards the inlet of the next evaporator.

In practice, in this embodiment, it may be correct to state that the pump 540 receives (or processes) all of the tomato juice circulating within the evaporator 110, including both the incoming tomato juice and the tomato juice coming back from the tube bundle 530, and that it is adapted to pump it, in part, within the tube bundle 530 and, in part, towards the outlet.

The apparatus 100 of Figure 1 further comprises a second concentration apparatus 115, which is adapted to receive the (concentrated) tomato juice leaving the first concentration apparatus 105, i.e. the first evaporator(s) 110, so as to further concentrate it and obtain a final tomato concentrate B, for example.

The second concentration apparatus 115 comprises at least one, more preferably a plurality, of second evaporators 120.

Inside each of these second evaporators 120, the incoming tomato juice (coming from the first concentration apparatus 105) is subjected to an evaporation process so as to obtain, as output, an (even more) concentrated tomato juice and vapour.

In this case as well, in order to carry out this evaporation process, each second evaporator 120 generally comprises a heat exchanger adapted to put the tomato juice in a heat exchange relation with a high-temperature vapour, keeping them physically separated, so that the vapour releases heat to the tomato juice, causing the evaporation of at least part of the solvent (typically water) contained therein.

The temperature of the vapour that is put in heat exchange relation with the tomato juice in each second evaporator 120 is preferably equal to or higher than 82°C.

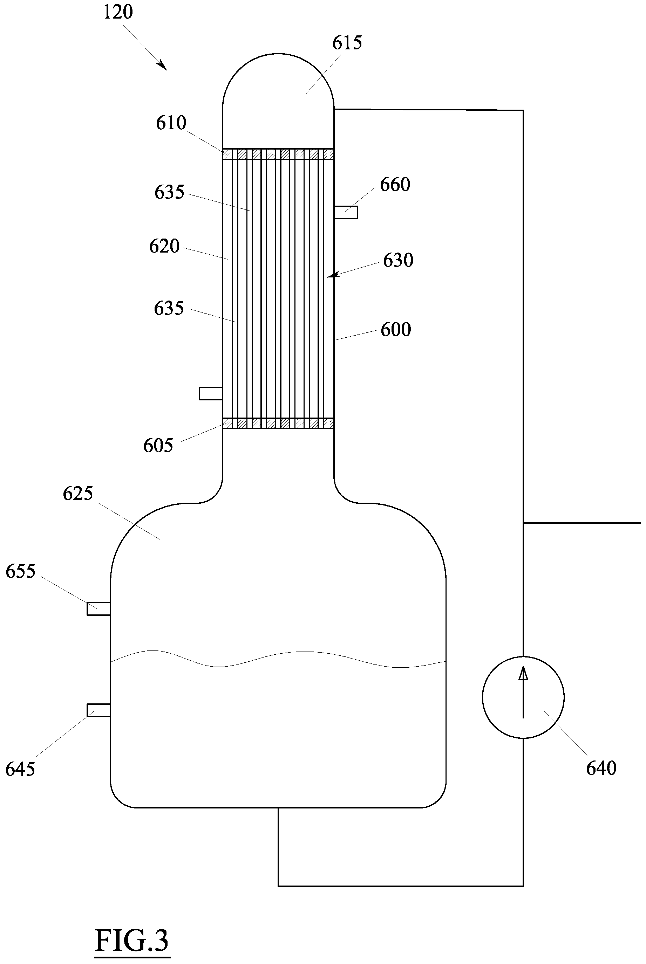

In the case herein illustrated, wherein the second concentration apparatus 115 comprises a plurality of second evaporators 120, the latter are preferably connected in such a way that the (more concentrated) tomato juice leaving each of these second evaporators 120 is supplied to the inlet of the following second evaporator 120 to be further concentrated. Preferably, each of these second evaporators 120 may be a forced circulation evaporator, wherein the tomato juice is passed through the heat exchanger by the action of a pump. As schematically illustrated in Figure 3, a forced circulation evaporator generally comprises an outer casing 600, whose internal volume is divided by a pair of separating baffles 605 and 610 into three distinct chambers, comprising an upper chamber 615, an intermediate chamber 620 comprised between the two separating baffles 605 and 610, and a lower chamber 625.

A tube bundle 630, which is formed by a plurality of substantially vertically oriented tubes 635 and adapted to put the upper chamber 615 in communication with the lower chamber 625, may be housed inside the intermediate chamber 620.

The evaporator may therefore comprise a pump 640, which is adapted to receive the incoming tomato juice and pump it into the tubes 635, for example into the upper chamber 615, so as to create within said tubes 635 a forced downward flow of tomato juice, until it reaches the lower chamber 625.

Thus, the tubes 635 of the tube bundle 630 are substantially always full of tomato juice.

At the same time, the outer surfaces of the tubes 635 are slightly touched by hot vapour, whose effect is to heat the tubes 635 and the tomato juice therein, causing some of the water contained therein to evaporate.

Thus, both the (more) concentrated tomato juice and the vapour produced (separated) by the evaporation of the tomato juice itself are collected in the lower chamber 625.

In the illustrated example, the pump 640 is adapted to draw the tomato juice directly from the lower chamber 625 of the evaporator, which may be provided with an additional inlet port 645 to supply the tomato juice to be concentrated.

The delivery of the pump 640 can then be connected to a distribution network that conveys the pumped tomato juice, in part towards the tubes 635 of the tube bundle 630 as outlined above, and in part towards the inlet of the following evaporator.

Although a forced circulation evaporator of the downward-flow type has been outlined, it cannot be ruled out that, in other embodiments, it could be of the upward-flow type, i.e. wherein the tomato juice is pumped into the tubes 635 from the bottom upwards.

In such a case, the chamber 625 and the tube bundle 630 could be contained within separate casings, possibly arranged side by side, and communicating at the top by a connection duct, so that the pump 640, drawing the tomato juice from the bottom of the chamber 625, can pump it into the tubes 635 from the bottom upwards, and that the vapour obtained, gathering in a space located above the tube bundle 630, can return to the chamber 625 through the connection pipe.

However, it cannot be ruled out that, in other embodiments, the tube bundle 630 of the forced circulation evaporator may be horizontal or inclined, i.e. formed from horizontally oriented tubes 635.

The plant 100 of Figure 1 further comprises a first compressor 130 and a second compressor 135, each of which may be a turbine compressor (or turbo-compressor) and may be driven by a motor, typically an electric motor.

The first compressor 130 is adapted to receive as input both the vapour leaving the first concentration apparatus 105 and the vapour leaving the second concentration apparatus 115.

More specifically, the first compressor 130 is adapted to receive as input the vapour obtained from the evaporation of the tomato juice in each of the first evaporators 110, as well as the vapour obtained from the evaporation of the tomato juice in each of the second evaporators 120.

To this end, the inlet of the first compressor 130 may be connected via a supply network 140 to a vapour outlet of each of the first and second evaporators 110 and 120.

By way of illustration and not limitation, in the first and second evaporators 110 and 120 herein illustrated, the vapour outlet port may open on the lower chamber 525 or 625 of the evaporator itself and is indicated by references 555 and 655 respectively in Figures 2 and 3.

Before reaching the inlet of the first compressor 130, the vapour may possibly pass through a separator, e.g. a centrifugal separator (not illustrated), adapted to retain the liquid droplets transported with the vapour and send them back into the evaporators, for example.

In any case, the first compressor 130 has the function of increasing the pressure and, consequently, the temperature of the vapour received.

Some of the pressurised and heated vapour leaving the first compressor 130 is then conveyed into each first evaporator 110, for example into the intermediate chamber 520 thereof, where it heats the tubes of the tube bundle 530 to cause/support the evaporation of the tomato juice, according to the modes outlined above.

Another part of the pressurised and heated vapour leaving the first compressor 130 is instead conveyed to the inlet of the second compressor 135, in order to obtain as output from the latter, a further compressed and thus further heated vapour.

To this end, the plant 100 may comprise a first distribution network 145 adapted to link an outlet for the compressed vapour of the first compressor 130 with both an inlet of the second compressor 135 and an inlet of the vapour of each first evaporator 110, so that this vapour may run over the tube bundle 530 by entering into a heat exchange relation with the tomato juice contained therein.

In the embodiment herein illustrated, the vapour inlet of each first evaporator 110 may be the one indicated by 560 in Figure 2 and may flow into the intermediate chamber 520.

The further pressurised and heated vapour leaving the second compressor 135 is finally conveyed into each of the second evaporators 120, for example into the intermediate chamber 620 thereof, where it heats the tubes of the tube bundle 630 to cause/support the evaporation of the tomato juice, according to the modes outlined above.

To this end, the plant 100 may comprise a second distribution network 150 adapted to link an outlet for the compressed vapour of the second compressor 135 with an inlet for the vapour of each second evaporator 120, so that this vapour may run over the tube bundle 630 by entering into a heat exchange relation with the tomato juice contained therein.

In the embodiment illustrated herein, the vapour inlet of each second evaporator 120 may be the one indicated by 660 in Figure 3 and may flow into the intermediate chamber 620. In order to cope with possible high demands for vapour, for example if the incoming tomato juice is at a particularly low temperature, the plant 100 of Figure 1 may possibly also comprise a boiler 155, for example a gas boiler, which is adapted to produce vapour which, via a further distribution network 160, can be conveyed into each of the first and second evaporators 110 and 120, for example by introducing it into the first and/or second distribution networks 145 and 150, so that this vapour can also slightly touch the tube bundles 530 and 630 entering into a heat exchange relationship with the tomato juice therein.

In particular, by introducing the vapour produced in the boiler 155 into the distribution network 150, it (or at least a part thereof) would reach the tube bundles 630 without undergoing any compression step.

By introducing the vapour produced in the boiler 155 (or at least a part thereof) into the distribution network 145, upstream of the branch towards the second compressor 135 (as illustrated), this vapour would reach, in part, the tube bundles 530 without being compressed, and in part, the tube bundles 630 after having been compressed in the second compressor 135.

However, it should be specified that the distribution network 160 of the vapour produced by the boiler 155 could be configured to supply said vapour to any one or more points of the circuit affected by the vapours released from the tomato juice in the evaporators 110 and/or 120, in particular to any one or more points of the first and/or second distribution networks 145 and 150 and/or to any one or more points of the supply network 140 as well.

In the latter case, the vapour produced by the boiler 155 (or at least a part thereof) would be subjected to at least one compression step before reaching the tube bundles 530, as well as two compression steps before reaching the tube bundles 630.

Regardless of these considerations, the vapour that is introduced into each of the first and second evaporators 110 and 120 tends to condense at least partially within the evaporator itself, for example within the intermediate chamber 520 or 620, passing in part into the liquid phase and possibly remaining in part in the vapour phase.

This mass of condensate and vapour can be drawn from each evaporator 110 and 120 and conveyed via a collection network 165 to a condenser 170 or other cooling device, so as to complete the condensation of the vapours and reduce the temperature of the condensates, before disposing of them in the sewage system.

It should be noted that any exceeding amount of vapour that cannot be condensed in the evaporators 110 and 120 could also be drawn and sent to the condenser 170 before the first compression and/or before the second compression, i.e. it could be drawn from the supply network 140 and/or the distribution network 150 and/or the distribution network 145.

In practice, the condenser 170 could be connected to any one or more points of the circuit affected by the vapours released from the tomato juice in the evaporators 110 and/or 120, in particular to any one or more points of the first and/or second distribution network 145 and 150 and/or to any one or more points also of the supply network 140.

In this case, however, not all of the vapour drawn from these points should reach the evaporator 170, but only the part corresponding to that which would not be able to condense in evaporators 110 and/or 120, leaving the remainder to continue its path.

In view of the above, the tomato juice A entering plant 100, which, as mentioned, may come from an extraction device or a pre-concentration system, is in fact subjected to two concentration steps in a consecutive manner.

The first concentration step, which is carried out by means of the first evaporator(s) 110, allows the tomato juice to be concentrated to an intermediate concentration level between the starting level and the final level of tomato concentrate B desired.

This concentration level can, for example, be between 8 and 16 degrees Brix.

The second concentration step, which is carried out by means of the second evaporator(s) 120, makes it possible to further concentrate the tomato juice leaving the first step until the final tomato concentrate level B is reached.

This final concentration level may be, for example, between 12 and 38 degrees Brix.

The heat required to complete both the first and second concentration steps is provided by mechanical compression of the vapour that separates from the tomato juice during the concentration step.

In particular, the vapour obtained from the first evaporator(s) 110 and the second evaporator(s) 120 is recovered, in whole or in part, and compressed in the first compressor 130 until it reaches a temperature suitable for carrying out the first concentration step, which is obviously lower than that required to also complete the second step.

A part of the vapour compressed by the first compressor 130 is then directly supplied into the first evaporator(s) 110, while another part, e.g. the remaining part, is further compressed in the second compressor 135, so that it can reach a temperature value suitable for carrying out the second concentration step.

This bi-compressed vapour portion is then supplied into the second evaporator(s) 120. In practice, heat exchange occurs through the mechanical compression of the vapour separated from the tomato juice during evaporation, which is taken:
- in part, to the temperature value required by the first evaporator(s) 110, e.g. with hybrid circulation, passing through a single first compressor 130; and
- in part, to the temperature value required by the second evaporator(s) 120, e.g. with forced circulation, passing through the first compressor 130 and the second compressor 135 put in series with the first.

Thus, the heat exchange necessary for the semi-concentrated tomato juice, obtained as output of the first evaporator(s) 110, is carried out with a reduced increase in temperature and therefore under conditions of maximum energy efficiency; whereas the heat exchange necessary for tomato juice with a higher concentration, obtained as output of the second evaporator(s) 120, is carried out with a greater temperature increase, so as to allow concentration of the tomato juice with a limited heat exchange surface and a reduced mechanical power necessary for circulation thereof inside the exchanger.

In this context, the vapour produced by the boiler 155 can only be used to support the operation of the plant 100 in the event of high heat demand conditions.

The concentrated tomato juice B leaving the second concentration step, i.e. the second evaporator(s) 120, may eventually be removed from the plant 100, e.g. collected in one or more storage tanks waiting, for example, to be conveyed to the filling machines for packaging.

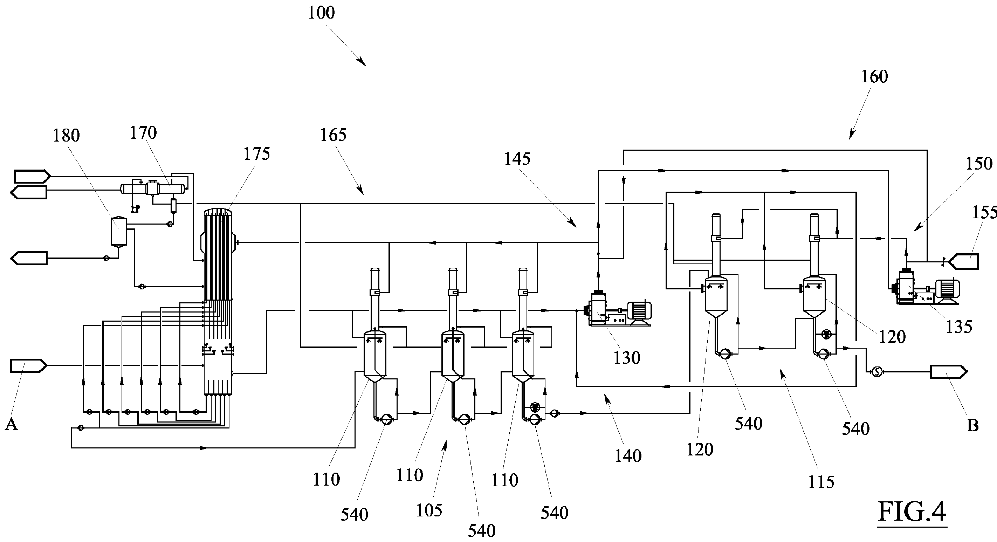

A variant of the concentration plant 100 outlined above is illustrated in the diagram of Figure 4.

This variant provides that, in addition to what has been described so far, the plant 100 may comprise a preliminary evaporator 175 adapted to subject the tomato juice A entering the plant 100 to a preliminary evaporation process in order to obtain as output the pre-concentrated tomato juice, which is then intended to be supplied as input to the first concentration apparatus 105, i.e. to the first evaporator(s) 110.

In this case as well, in order to carry out this evaporation process, the preliminary evaporator 175 generally comprises a heat exchanger adapted to put the tomato juice in a heat exchange relation with a high-temperature vapour, keeping them physically separated, so that the vapour releases heat to the tomato juice, causing the evaporation of at least part of the solvent (typically water) contained therein.

The temperature of the vapour that is put in heat exchange relation with the tomato juice in the preliminary evaporator 175 is preferably equal to or higher than 76 °C .

The preliminary evaporator 175 may for example be a falling film evaporator.

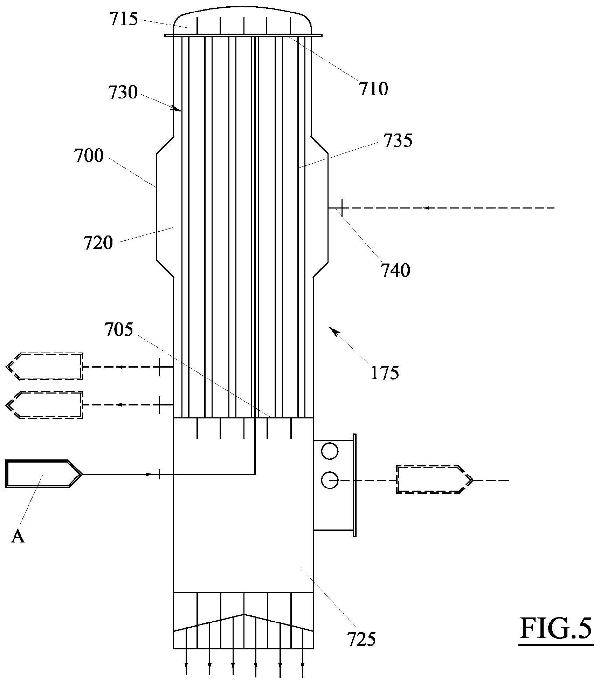

As shown in Figure 5, this evaporator may comprise an external casing 700, whose internal volume is divided by a pair of separating baffles 705 and 710 into three distinct chambers, of which an upper chamber 715, an intermediate chamber 720 comprised between the two separating baffles 705 and 710, and a lower chamber 725.

A tube bundle 730 formed by a plurality of substantially vertically oriented tubes 735, each of which is adapted to put the upper chamber 715 in communication with the lower chamber 725, may be housed inside the intermediate chamber 720.

The tomato juice A is supplied into the upper chamber 715, so that by gravity it tends to flow along the tubes of the tube bundle 730, forming a sort of veil or film which flows adhering to the internal surfaces of the tubes 735, leaving them clear in the middle.

The outer surfaces of the same tubes 735 are at the same time slightly touched by a hot vapour, which has the effect of heating the tubes and the veil of tomato juice therein, causing a part of the water contained therein to evaporate.

Thus, both the (more) concentrated tomato juice and the vapour produced by the evaporation of the tomato juice itself are collected in the lower chamber 725.

The (more) concentrated tomato juice drawn from the lower chamber 725 may be returned in part into the preliminary evaporator 175, before being conveyed to the inlet of the first evaporator(s) 110.

The vapour that has been separated from the tomato juice may instead be drawn from the preliminary evaporator 175, for example from the lower chamber 725, and conveyed to the inlet of the first compressor 130.

To this end, the supply network 140 may be structured so as to connect the inlet of the first compressor 130, not only with the vapour outlets of the first evaporator(s) 110 and the second evaporator(s) 120, but also with a vapour outlet of the preliminary evaporator 175, which opens, for example, on the lower chamber 725.

Before reaching the first compressor 130, the vapour leaving the preliminary evaporator 175 may possibly pass through a separator, for example a centrifugal separator (not illustrated), adapted to retain the droplets of liquid transported with the vapour and send them back into the preliminary evaporator 175 itself, for example.

In this context, the hot vapour that is used to cause the evaporation of the tomato juice inside the preliminary evaporator 175 may in turn be a part of the one which is compressed by the first compressor 130.

In other words, a portion of the compressed vapour leaving the first compressor 130 can also be conveyed into the preliminary evaporator 175, so that it can slightly touch the tube bundle 730 entering into a heat exchange relation with the tomato juice contained therein. To this end, the first distribution network 145 may be structured in such a way as to connect the outlet of the first compressor 130, not only with the vapour inlet of the first evaporator(s) 110 and with the inlet of the second compressor 135, but also with an inlet of the preliminary evaporator 175, which may flow for example into the intermediate chamber 720.

In the embodiment herein illustrated, this vapour inlet can be the one indicated with 740 in Figure 5.

In order to meet high heat demands, the preliminary evaporator 175 can also receive a part of heat from the boiler 155, e.g. by means of the additional distribution network 160 which flows into the first distribution network 145 as modified above.

In any case, as heat is transferred to the tomato juice, at least part of the vapour introduced into the preliminary evaporator 175 condenses inside the intermediate chamber 720, passing into liquid form.

This condensate can be drawn from the second intermediate chamber 720 and conveyed to a storage tank 180, into which the condensate from the cooling tower 170 also flows, waiting to be dispensed in the sewage system.

Any residual (or excess) vapour, i.e., that has failed to condense in contact with the tube bundle 730, can be drawn from the intermediate chamber 720 or the lower chamber 725, and sent to the condenser 170, to complete its condensation before it is also disposed of. Even in this case, the excess vapour could still be drawn from any one or more points in the circuit affected by the vapours released from the tomato juice in the evaporators 110 and/or 120 and/or 175, as explained above,

The plant 100 compliant with the second variant outlined above is mainly used when the incoming tomato juice A contains a lot of water (i.e. has a very low Brix value), for example but not necessarily when it comes directly from an extraction device such as a turbo-extractor.

Thus, the tomato juice is substantially subjected to three concentration steps, including a preliminary step followed by the two steps already described with reference to the diagram in Figure 1.

In practice, in the preliminary step, which takes place inside the preliminary evaporator 175, the tomato juice is pre-concentrated, bringing it to an intermediate concentration level between the initial concentration and that obtainable with the first subsequent concentration step.

This concentration level can, for example, be between 6 and 10 degrees Brix.

With the exception of any vapour from the boiler 155, which is useful for example to satisfy any high vapour demand, all the heat required to carry out these three concentration steps is obtained by mechanical compression of the vapours separated from the tomato juice in the first evaporator(s) 110 and the second evaporator(s) 120 and in the preliminary evaporator 175.

In particular, the vapour compressed by the first compressor 130 is used in the preliminary evaporator 175 and the first evaporator(s) 110, while the vapour compressed by the second compressor 135 is used in the second evaporator(s) 120.

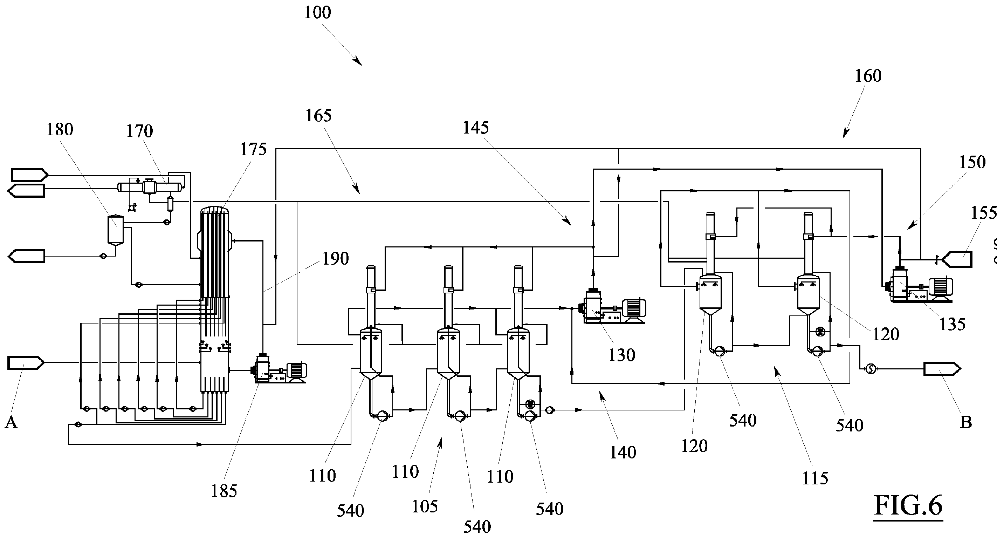

A variant of the concentration plant 100 outlined above is illustrated in the diagram in Figure 6.

In this further variant, the vapour compressed by the first and second compressors 130 and 135 is not supplied to the preliminary evaporator 175 but is used exclusively in the first evaporator(s) 110 and the second evaporator(s) 120 as in the diagram of Figure 1.

The vapour necessary for the tomato juice evaporation in the preliminary evaporator 175 is obtained by means of an auxiliary compressor 185, for example a turbo-compressor, which is adapted to receive the vapour that has separated from the tomato juice inside the preliminary evaporator 175 itself, for example from the lower chamber 725, to compress it (increasing its temperature) and to send it back to the preliminary evaporator 175, for example in the intermediate chamber 720, so that it can slightly touch the tube bundle 730 entering into a heat exchange relation with the tomato juice contained therein.

To this end, an inlet of the auxiliary compressor 185 can be connected with the lower chamber 725 of the preliminary evaporator 175, while the outlet (or delivery) can be connected, via a connection line 190, with the vapour inlet 740 which is in communication with the intermediate chamber 720.

Before reaching the inlet of the auxiliary compressor 185, the vapour may possibly be passed through a separator, for example a centrifugal separator, adapted to retain the droplets of liquid transported by the vapour and return them, for example, into the chamber 725 of the evaporator 175.

If necessary, the vapour inlet may also receive vapour from the boiler 155 via the further distribution network 160 which, in this variant, in addition to introducing vapour to the first evaporator(s) 110 and the second evaporator(s) 120, may also be adapted to introduce vapour to the intermediate chamber 720 of the preliminary evaporator 175, for example by flowing into the connection line 190 between the outlet of the auxiliary compressor 185 and the inlet 740 of the vapour of the preliminary evaporator 175.

Even in this case, the vapour produced by the boiler 155 could still be introduced into any one or more points of the circuit affected by the vapours released from the tomato juice in the evaporators 110 and/or 120 and/or 175, as explained above.

In the latter variant, the operation of the preliminary evaporator 175 is therefore supported by the auxiliary compressor 185, being substantially autonomous with respect to the operation of the first evaporator(s) 110 and the second evaporator(s) 120, which are supported by the first and second compressors 130 and 135.

Another variant (not shown) of the concentration plant 100 could provide that the first evaporators 110 of the diagram in Figure 1, which have been exemplified as hybrid circulation evaporators, are replaced by a falling film evaporator as the one described with reference to the diagrams in Figure 4 and 5.

From another perspective, this further plant variant could correspond to the diagram in Figure 4 with the elimination of the concentration apparatus 105, i.e. with elimination of the evaporators 110.

Finally, it cannot be ruled out that, in the context of this further variant, the second evaporators 120, which have been exemplified as forced-circulation evaporators, may not be replaced with hybrid-circulation evaporators.

Obviously, an expert in the field can make several technical-applicative modifications without departing from the scope of the invention as hereinbelow claimed.

## Claims

1. A plant (100) for concentrating tomato juice, comprising:
- at least a first evaporator (110) adapted to subject an incoming tomato juice to an evaporation process to obtain as output a concentrated tomato juice and vapour,
- at least a second evaporator (120) adapted to subject the concentrated tomato juice leaving the first evaporator (110) to at least one evaporation process to obtain as output further concentrated tomato juice and vapour,
- a first compressor (130) adapted to receive as input the vapour leaving the first evaporator (110) and the vapour leaving the second evaporator (120) to obtain as output a compressed vapour,
- a second compressor (135) adapted to receive part of the compressed vapour leaving the first compressor (130) in order to obtain as output further compressed vapour,
- a first distribution network (145) adapted to convey the compressed vapour leaving the first compressor (130) in part into the second compressor (135) and in part into the first evaporator (110), so that it is put in a heat exchange relation with the tomato juice in the first evaporator (110),
- a second distribution network (150) adapted to convey the further compressed vapour leaving the second compressor (135) into the second evaporator (120) so that it is put in a heat exchange relation with the tomato juice in the second evaporator (120).

2. A plant (100) according to claim 1, comprising a plurality of first evaporators (110) connected so as to be crossed in series by the tomato juice, the first compressor (130) being adapted to receive as input the vapour leaving all of said first evaporators (110), and the first distribution network (145) being adapted to convey a part of the compressed vapour leaving the first compressor (130) into each of said first evaporators (110).

3. A plant (100) according to any one of the preceding claims, wherein each first evaporator (110) is a hybrid circulation evaporator.

4. A plant (100) according to any one of the preceding claims, comprising a plurality of second evaporators (120) connected so as to be crossed in series by the concentrated juice, the first compressor (130) being adapted to receive as input the vapour leaving all of said second evaporators (120), and the second distribution network (150) being adapted to convey a part of the further compressed vapour leaving the second compressor (135) into each of said second evaporators (120).

5. A plant (100) according to claim 4, wherein each second evaporator (120) is a forced circulation evaporator.

6. A plant (100) according to any one of the preceding claims, comprising at least a preliminary evaporator (175), which is adapted to subject an incoming tomato juice to an evaporation process to obtain as output a pre-concentrated tomato juice and vapour, said at least one first evaporator (110) being adapted to receive as input the pre-concentrated tomato juice leaving said preliminary evaporator (175).

7. A plant (100) according to claim 6, wherein the first distribution network (145) is adapted to convey a part of the compressed vapour leaving the first compressor (130) into the preliminary evaporator (175), so as to put it in a heat exchange relation with the tomato juice in said preliminary evaporator (175), and wherein the first compressor (130) is also adapted to receive the vapour leaving the preliminary evaporator (175).

8. A plant (100) according to claim 6, further comprising a further compressor (185), which is adapted to receive as input the vapour leaving the preliminary evaporator (175) in order to obtain as output a compressed vapour, and a connection line (190) adapted to convey the compressed vapour leaving the preliminary compressor (175) back into the preliminary evaporator (175) itself, so as to put it in a heat exchange relation with the tomato juice in the preliminary evaporator (175).

9. A plant (100) according to any one of claims 6 to 8, wherein said preliminary evaporator (175) is a falling film evaporator.

10. A plant (100) according to any one of the preceding claims, comprising a boiler (155) adapted to produce vapour and a further distribution network (160) adapted to convey the vapour produced by the boiler (155) into each of the first and second evaporators (110, 120), and into the preliminary evaporator (175) if present, so as to put it in a heat exchange relation with the tomato juice inside them, possibly after having made it pass at least partially through the first and/or second compressor (130, 135).

11. A method for concentrating tomato juice, comprising the steps of:
- subjecting an incoming tomato juice to an initial evaporation process to obtain a concentrated tomato juice and vapour,
- subjecting the concentrated tomato juice obtained from the first evaporation process to a second evaporation process to obtain a further concentrated tomato juice and vapour,
- compressing the vapour obtained from the first and second evaporation processes with a first compressor (130) to obtain a compressed vapour,
- using a first part of the compressed vapour to carry out the first evaporation process,
- compressing a second part of the compressed vapour with a second compressor (135) to obtain a further compressed vapour,
- using the further compressed vapour to carry out the second evaporation process.

## Patentansprüche

1. Anlage (100) zum Konzentrieren von Tomatensaft, Folgendes umfassend:
- mindestens einen ersten Verdampfer (110), der dafür eingerichtet ist, einen eingehenden Tomatensaft einem Verdampfungsprozess zu unterziehen, um als Ausgabe einen konzentrierten Tomatensaft und Dampf zu erhalten,
- mindestens einen zweiten Verdampfer (120), der dafür eingerichtet ist, den konzentrierten Tomatensaft, der den ersten Verdampfer (110) verlässt, mindestens einem Verdampfungsprozess zu unterziehen, um als Ausgabe einen weiter konzentrierten Tomatensaft und Dampf zu erhalten,
- einen ersten Kompressor (130), der dafür eingerichtet ist, als Eingabe den Dampf, der den ersten Verdampfer (110) verlässt, und den Dampf, der den zweiten Verdampfer (120) verlässt, zu empfangen, um als Ausgabe einen komprimierten Dampf zu erhalten,
- einen zweiten Kompressor (135), der dafür eingerichtet ist, einen Teil des komprimierten Dampfes zu empfangen, der den ersten Verdampfer (110) verlässt, um als Ausgabe weiter komprimierten Dampf zu erhalten,
- ein erstes Verteilungsnetz (145), das dafür eingerichtet ist, den komprimierten Dampf, der den ersten Kompressor (130) verlässt, teilweise in den zweiten Kompressor (135) und teilweise in den ersten Verdampfer (110) zu befördern, so dass er in ein Wärmeaustauschverhältnis mit dem Tomatensaft in dem ersten Verdampfer (110) gebracht wird,
- ein zweites Verteilungsnetz (150), das dafür eingerichtet ist, den weiter komprimierten Dampf, der den zweiten Kompressor (135) verlässt, in den zweiten Verdampfer (120) zu befördern, so dass er in ein Wärmeaustauschverhältnis mit dem Tomatensaft in dem zweiten Verdampfer (120) gebracht wird.

2. Anlage (100) nach Anspruch 1, mehrere erste Verdampfer (110) umfassend, die derart verbunden sind, dass sie von dem Tomatensaft nacheinander durchquert werden, wobei der erste Kompressor (130) dafür eingerichtet ist, als Eingabe den Dampf zu empfangen, der alle der ersten Verdampfer (110) verlässt, und das erste Verteilungsnetz (145) dafür eingerichtet ist, einen Teil des komprimierten Dampfes, der den ersten Kompressor (130) verlässt, in jeden der ersten Verdampfer (110) zu befördern.

3. Anlage (100) nach einem der vorhergehenden Ansprüche, wobei jeder erste Verdampfer (110) ein Hybrid-Umlaufverdampfer ist.

4. Anlage (100) nach einem der vorhergehenden Ansprüche, mehrere zweite Verdampfer (120) umfassend, die derart verbunden sind, dass sie von dem Tomatensaft nacheinander durchquert werden, wobei der erste Kompressor (130) dafür eingerichtet ist, als Eingabe den Dampf zu empfangen, der alle zweiten Verdampfer (120) verlässt, und das zweite Verteilungsnetz (150) dafür eingerichtet ist, einen Teil des weiter komprimierten Dampfes, der den zweiten Kompressor (135) verlässt, in jeden der zweiten Verdampfer (120) zu befördern.

5. Anlage (100) nach Anspruch 4, wobei jeder zweite Verdampfer (120) ein Zwangsumlaufverdampfer ist.

6. Anlage (100) nach einem vorhergehenden Ansprüche, mindestens einen Vorverdampfer (175) umfassend, der dafür eingerichtet ist, einen eingehenden Tomatensaft einem Verdampfungsprozess zu unterziehen, um als Ausgabe einen vorkonzentrierten Tomatensaft und Dampf zu erhalten, wobei der mindestens eine erste Verdampfer (110) dafür eingerichtet ist, als Eingabe den vorkonzentrierten Tomatensaft zu empfangen, der den Vorverdampfer (175) verlässt.

7. Anlage (100) nach Anspruch 6, wobei das erste Verteilungsnetz (145) dafür eingerichtet ist, einen Teil des komprimierten Dampfes, der den ersten Kompressor (130) verlässt, in den Vorverdampfer (175) zu befördern, so dass er in ein Wärmeaustauschverhältnis mit dem Tomatensaft in dem Vorverdampfer (175) gebracht wird, und wobei der erste Kompressor (130) auch dafür eingerichtet ist, den Dampf zu empfangen, der den Vorverdampfer (175) verlässt.

8. Anlage (100) nach Anspruch 6, ferner einen weiteren Kompressor (185), der dafür eingerichtet ist, als Eingabe den Dampf zu empfangen, der den Vorverdampfer (175) verlässt, um als Ausgabe komprimierten Dampf zu erhalten, und eine Verbindungsleitung (190) umfassend, die dafür eingerichtet ist, den komprimierten Dampf, der den Vorverdampfer (175) verlässt, zurück in den Vorverdampfer (175) selbst zu befördern, so dass er in ein Wärmeaustauschverhältnis mit dem Tomatensaft in dem Vorverdampfer (175) gebracht wird.

9. Anlage (100) nach einem der Ansprüche 6 bis 8, wobei der Vorverdampfer (175) ein Fallfilmverdampfer ist.

10. Anlage (100) nach einem der vorhergehenden Ansprüche, einen Dampfkessel (155), der dafür eingerichtet ist, Dampf zu produzieren, und ein weiteres Verteilungsnetz (160) umfassend, das dafür eingerichtet ist, den in dem Dampfkessel (155) erzeugten Dampf in jeden der ersten und zweiten Verdampfer (110, 120) und, falls vorhanden, in den Vorverdampfer (175) zu befördern, so dass er in ein Wärmeaustauschverhältnis mit dem Tomatensaft darin gebracht wird, möglicherweise nachdem er zumindest teilweise durch den ersten und/oder den zweiten Kompressor (130, 135) geführt wurde.

11. Verfahren zum Konzentrieren von Tomatensaft, die folgenden Schritte umfassend:
- Unterziehen eines eingehenden Tomatensafts einem anfänglichen Verdampfungsprozess, um einen konzentrierten Tomatensaft und Dampf zu erhalten,
- Unterziehen des konzentrierten Tomatensafts, der aus dem ersten Verdampfungsprozess erhalten wird, einem zweiten Verdampfungsprozess, um einen weiter konzentrierten Tomatensaft und Dampf zu erhalten,
- Komprimieren des Dampfes, der in dem ersten und dem zweiten Verdampfungsprozess erhalten wird, mit einem ersten Kompressor (130), um komprimierten Dampf zu erhalten,
- Verwenden eines ersten Teils des komprimierten Dampfes, um den ersten Verdampfungsprozess auszuführen,
- Komprimieren eines zweiten Teils des komprimierten Dampfes mit einem zweiten Kompressor (135), um einen weiter komprimierten Dampf zu erhalten,
- Verwenden des weiter komprimierten Dampfes, um den zweiten Verdampfungsprozess auszuführen.

## Revendications

1. Installation (100) destinée à la concentration de jus de tomate, comprenant :
- au moins un premier évaporateur (110) adapté pour soumettre un jus de tomate entrant à un processus d'évaporation afin d'obtenir en sortie un concentré de jus de tomate et de la vapeur,
- au moins un deuxième évaporateur (120) adapté pour soumettre le concentré de jus de tomate quittant le premier évaporateur (110) à au moins un processus d'évaporation afin d'obtenir en sortie un concentré de jus de tomate et de la vapeur supplémentaires,
- un premier compresseur (130) adapté pour recevoir en entrée la vapeur sortant du premier évaporateur (110) et la vapeur sortant du deuxième évaporateur (120) afin d'obtenir en sortie une vapeur comprimée,
- un deuxième compresseur (135) adapté pour recevoir une partie de la vapeur comprimée sortant du premier compresseur (130) afin d'obtenir en sortie une vapeur comprimée supplémentaire,
- un premier réseau de distribution (145) adapté pour acheminer la vapeur comprimée sortant du premier compresseur (130) en partie vers le deuxième compresseur (135) et en partie vers le premier évaporateur (110), de manière à la mettre en relation d'échange thermique avec le jus de tomate dans le premier évaporateur (110),
- un deuxième réseau de distribution (150) adapté pour acheminer la vapeur davantage comprimée sortant du deuxième compresseur (135) vers le deuxième évaporateur (120) afin qu'elle soit mise en relation d'échange thermique avec le jus de tomate dans le deuxième évaporateur (120).

2. Installation (100) selon la revendication 1, comprenant une pluralité de premiers évaporateurs (110) reliés de manière à être traversés en série par le jus de tomate, le premier compresseur (130) étant adapté pour recevoir en entrée la vapeur sortant de tous lesdits premiers évaporateurs (110), et le premier réseau de distribution (145) étant adapté pour acheminer une partie de la vapeur comprimée sortant du premier compresseur (130) dans chacun desdits premiers évaporateurs (110).

3. Installation (100) selon l'une quelconque des revendications précédentes, dans laquelle chaque premier évaporateur (110) est un évaporateur à circulation hybride.

4. Installation (100) selon l'une quelconque des revendications précédentes, comprenant une pluralité de deuxièmes évaporateurs (120) reliés de manière à être traversés en série par le concentré de jus, le premier compresseur (130) étant adapté pour recevoir en entrée la vapeur sortant de tous lesdits deuxièmes évaporateurs (120), et le deuxième réseau de distribution (150) étant adapté pour acheminer une partie de la vapeur comprimée supplémentaire sortant du deuxième compresseur (135) dans chacun desdits deuxièmes évaporateurs (120).

5. Installation (100) selon la revendication 4, dans laquelle chaque deuxième évaporateur (120) est un évaporateur à circulation forcée.

6. Installation (100) selon l'une quelconque des revendications précédentes, comprenant au moins un évaporateur préliminaire (175), adapté pour soumettre un jus de tomate entrant à un processus d'évaporation afin d'obtenir en sortie un préconcentré de jus de tomate et de la vapeur, ledit au moins un premier évaporateur (110) étant adapté pour recevoir en entrée le préconcentré de jus de tomate sortant dudit évaporateur préliminaire (175).

7. Installation (100) selon la revendication 6, dans laquelle le premier réseau de distribution (145) est adapté pour acheminer une partie de la vapeur comprimée sortant du premier compresseur (130) vers l'évaporateur préliminaire (175), de manière à la mettre en relation d'échange thermique avec le jus de tomate dans ledit évaporateur préliminaire (175), et dans laquelle le premier compresseur (130) est également adapté pour recevoir la vapeur sortant de l'évaporateur préliminaire (175).

8. Installation (100) selon la revendication 6, comprenant en outre un autre compresseur (185), adapté pour recevoir en entrée la vapeur sortant de l'évaporateur préliminaire (175) afin d'obtenir en sortie une vapeur comprimée, et une conduite de raccordement (190) adaptée pour acheminer la vapeur comprimée sortant du compresseur préliminaire (175) vers l'évaporateur préliminaire (175) lui-même, de manière à la mettre en relation d'échange thermique avec le jus de tomate dans l'évaporateur préliminaire (175).

9. Installation (100) selon l'une quelconque des revendications 6 à 8, dans laquelle ledit évaporateur préliminaire (175) est un évaporateur à film tombant.

10. Installation (100) selon l'une quelconque des revendications précédentes, comprenant une chaudière (155) adaptée pour produire de la vapeur et un réseau de distribution supplémentaire (160) adapté pour acheminer la vapeur produite par la chaudière (155) vers chacun des premier et deuxième évaporateurs (110, 120), et dans l'évaporateur préliminaire (175) s'il est présent, de manière à la mettre en relation d'échange thermique avec le jus de tomate contenu dans ceux-ci, éventuellement après l'avoir fait passer au moins en partie à travers le premier et/ou le deuxième compresseur (130, 135).

11. Procédé destiné à la concentration de jus de tomate, comprenant les étapes suivantes :
- la soumission d'un jus de tomate entrant à un processus d'évaporation initial afin d'obtenir un concentré de jus de tomate et de la vapeur,
- la soumission du concentré de jus de tomate obtenu à partir du premier processus d'évaporation à un deuxième processus d'évaporation afin d'obtenir un concentré de jus de tomate et de la vapeur supplémentaires,
- la compression de la vapeur obtenue à partir des premier et deuxième processus d'évaporation à l'aide d'un premier compresseur (130) afin d'obtenir une vapeur comprimée,
- l'utilisation d'une première partie de la vapeur comprimée pour effectuer le premier processus d'évaporation,
- la compression d'une deuxième partie de la vapeur comprimée à l'aide d'un deuxième compresseur (135) afin d'obtenir une vapeur comprimée supplémentaire,
- l'utilisation de la vapeur comprimée supplémentaire pour effectuer le deuxième processus d'évaporation.
